(19) **Europäisches Patentamt**
**European Patent Office**
**Office européen des brevets**

(11) **EP 2 133 671 B1**

(12) **EUROPEAN PATENT SPECIFICATION**

(45) Date of publication and mention
of the grant of the patent:
**07.05.2014 Bulletin 2014/19**

(51) Int Cl.:
***G01G 3/14*** *(2006.01)*

(21) Application number: **09158413.6**

(22) Date of filing: **22.04.2009**

(54) **A multi-point type weighing equipment and a manufacturing method for the same**

Mehrpunkt-Wiegevorrichtung und Herstellungsverfahren dafür

Équipement de pesage de type multipoint et son procédé de fabrication

| | |
|---|---|
| (84) Designated Contracting States: **AT BE BG CH CY CZ DE DK EE ES FI FR GB GR HR HU IE IS IT LI LT LU LV MC MK MT NL NO PL PT RO SE SI SK TR** | (72) Inventor: **Honda, Akihisa Tokyo 174-8630 (JP)** |
| (30) Priority: **09.06.2008 JP 2008150594** | (74) Representative: **Grünecker, Kinkeldey, Stockmair & Schwanhäusser Leopoldstrasse 4 80802 München (DE)** |
| (43) Date of publication of application: **16.12.2009 Bulletin 2009/51** | (56) References cited: **US-A- 3 290 928 US-A- 4 556 115** |
| (73) Proprietor: **Tanita Corporation Tokyo 174-0063 (JP)** | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

[Field of the Invention]

This invention relates to the multi-point type weighing equipment that comprises a plurality of load cells that convert distortion generated by load into electric signals.
Also, it is related with the manufacturing method of this multi-point type weighing equipment.

[Background of the Invention]

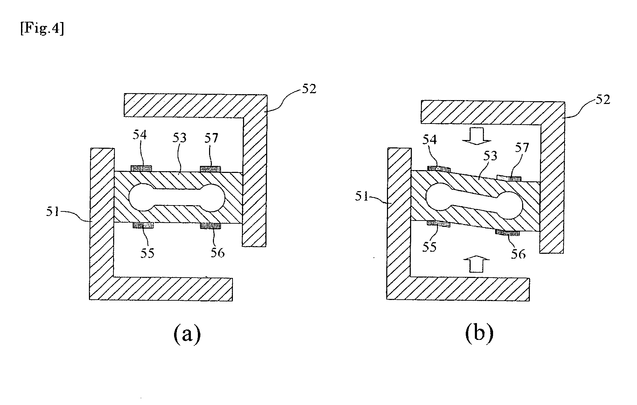

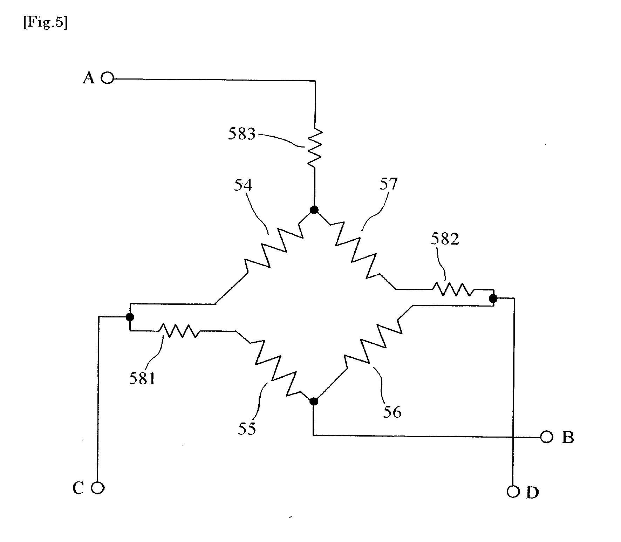

Although various methods exist among the weighing equipments (platform scale) that measure the weight of various kinds of objects, the weighing equipment especially using a load cell has high accuracy; and since an output is obtained electrically, it is used preferably.
An example of the section structure of load cell 50 used for weighing equipment is shown in Fig. 4.
Flexure element 53 is fixed between platform 51 and base 52 which shape is indicated in Fig. 4 (a), and strain gauges 54 - 57 of the same specification are joined by four points of the surface of flexure element 53.
In strain gauges 54-57, the resistance produces the change by distortion.
Since flexure element 53 will be distorted in shape shown in Fig. 4 (b) when force is added in the direction shown in this platform 51 and base 52 by arrows of Fig. 4 (b), strain gauges 54 - 57 on the surface are also distorted according to this.
In this case, since these resistances change, if a Wheatstone bridge circuit, in which these four strain gauge as constituent factors, is formed, and a gap from that zero balance is detected, distortion of flexure element 53 is detectable as electric signal.
In this Wheatstone bridge circuit, if resistance of strain gauges 54 - 57 is uniform when there is no distortion, output voltage in case of no distortion will be zero.
However, even if a designed value of resistance of four strain gauges 54 - 57 is the same, in fact, variation arises for these resistances.
As this variation, for example, some source depends a cause of manufacture error of a strain gauge, and some source depends on variation in a rate of change for these resistances based on temperature.
Therefore, in order to compensate this variation, a circuit indicated in Fig. 5, which inserts a plurality of resistance in the Wheatstone bridge circuit, is used.
Here, in this Wheatstone bridge circuit, strain gauges (resistance) 54 - 57 are to basis of the bridge, input voltage is applied between terminals AB, and output voltage is outputted from, between terminal CDs.
Here, in the other than these, temperature compensator 581, zero balance adjustment resistance 582, and output adjustment resistance 583 are provided.
Input voltage is about 5V typically, and distortion is detected from the change of this output voltage.
Resistance of strain gauges 54 - 57 is about 350 ohms, typically.
Here, temperature compensator 581 is, for example, formed with copper wire, and compensates a gap of zero balance of a Wheatstone bridge circuit depended on temperature utilizing change of resistance of copper wire depending on temperature.
Zero balance adjustment resistance 582 is fixed resistance, which is used in order to compensate resistance variation in manufacture, between strain gauges 54 - 57 and to maintain zero balance of the Wheatstone bridge circuit.
Hence, in a circuit of Fig. 5, it is adjusted by using these resistance for adjustment that a gap of zero balance should be made the minimum in a predetermined temperature span.
Output adjustment resistance 583 is resistance that makes proper volume of output voltage when there is distortion of the same volume.
As well as temperature compensator 581, it can also be considered as resistance having temperature characteristics that compensate a change of output voltage depended on temperature.
Specifically, Ni-foils resistance or the like can be used.
Although a resistance, which the value of resistance is changed depending on temperature, can be used for output adjustment resistance 583, in order to obtain predetermined characteristics, connected stuff of fixed resistance and proper temperature-sensitive resistance in parallel can also be used.
For temperature compensator 581, it is in the similar manner.
Hence, when manufacturing a load cell, other than strain gauges 54-57, these resistances are required to be set up and connected suitably.
Thus, without providing these resistances (with configuration which these resistance for adjustment is short-circuited,) the Wheatstone bridge circuit is configured by using each strain gauge; after measuring the characteristics, in a predetermined temperature span, a gap from zero balance is the minimum, and a change of output voltage depending temperature is set to the minimum as much as possible and is installed.

On the other hand, in order to make the scale into a thin shape, or in order to make area of a placing part of the weighing equipment larger, the weighing equipment can be a multipoint type.
In this case, a part generally being weighted is a human foot, and since load is applied to a plurality of places, it is a multi-point type weighing equipment which uses a plurality of load cells, for example, on four places.
In such a case, it is necessary to perform setup and installation of above-mentioned of resistance for every load cell.

Therefore, in JP 2005-3571A, a weighing equipment, which an input and an output of each load cell in the weighing equipment can be switched suitably and automatically by switching means connected to a plurality of load cells, is described.
By this method, the above-mentioned compensation can be properly performed for every load cell, and this operation came to be done easily.

The document US 4,556,115 A discloses a multi-point weighing equipment including a combination of load cells by using two Wheatstone bridge circuits. Each Wheatstone bridge circuit comprises four strain gauges connected by a pair of input nodes and a pair of output nodes. The pair of input nodes of each Wheatstone bridge circuit and the pair of output nodes of each Wheatstone bridge circuit are connected one to another and connected to a pair of input terminals and a pair of output terminals. Two strain gauges in each Wheatstone bridge circuit are connected in series to a desensitizing resistance.

From US 3,290,928 A, a strain measuring device is known having four measuring bridges, each including four strain gauges. One strain gauge in each measuring bridge is connected in series to a temperature compensation element.

[Description of the Invention]

[Problem(s) to be Solved by the Invention]

However, in the technology of JP 2005-3571 A, only a switching operation is performed automatically, and the above-mentioned adjustment and installation operation itself is needed to carry out for every load cell.

Hence, the time and cost requiring for adjustment becomes large in proportion to the number of using load cell.

Thus, when manufacturing amulti-point type weighing equipment using a plurality of load cells, it was difficult to fully reduce time and cost which requires for adjustment of a load cell.

This invention is made in view of this problem, and an object of this invention is to provide an invention that solves the above-mentioned problem.

SUMMARY OF THE INVENTION

This object is solved by the features of claims 1 and 7.

Further improvements are laid down in the sub-claims.

[Effect of the Invention]

Because this invention is comprised as mentioned above, in case of manufacturing the multi-point type weighing equipment using a plurality of load cells, the time and cost which requires the adjustment of a load cell can fully be reduced.

BRIEF DESCRIPTION OF THE DRAWINGS

Fig. 1 is a diagram indicating the composition of the detection circuit used for the multi-point type weighing equipment of the embodiment of the invention.
Fig. 2 is a diagram indicating the composition of the detection circuit used for the multi-point type weighing equipment of the embodiment of the invention with another expression.
Fig. 3 is a chart indicating the manufacturing method of the multi-point type weighing equipment of the embodiment of the invention.
Fig. 4 is a drawing indicating the section structure of a load cell.
Fig. 5 is a drawing indicating the composition of an example of the detection circuit in a single load cell.

## DESCRIPTION OF THE PREFERRED EMBODIMENTS

[Best Mode of Carrying Out the Invention]

Hereafter, as the best form for carrying out this invention, a multi-point type weighing equipment, which uses four load cells 10, 20, 30, and 40, is explained here.

Each load cell is the same specification and four strain gauges are provided for every load cell.

Distortion of the flexure element in each load cell occurs according to the load added to each load cell, and the resistances of four strain gauges are changed by this.

Therefore, if the Wheatstone bridge circuit that uses these four strain gauges (resistance) as a component is comprised, by change of resistance, the zero balance in a Wheatstone bridge circuit will collapse; and output voltage will be obtained.

The section structure of each load cell is the same as that of what was indicated in Fig. 4.

Hence, in each load cell, a flexure element of identical shape and a platform, and a base are provided; and, in each flexure element, four strain gauges are installed as shown in Fig. 4.

Here, strain gauges 14 - 17, 24 - 27, 34 - 37, 44 - 47 of the same specification are provided in load cells 10, 20, 30, and 40, respectively.

Here, strain gauges 14, 24, 34, and 37 are installed in the same position in Fig. 4; and about 15, 25, 35, and 45, and 16, 26, 36 and 46, and 17, 27, 37 and 47, are the same, respectively.

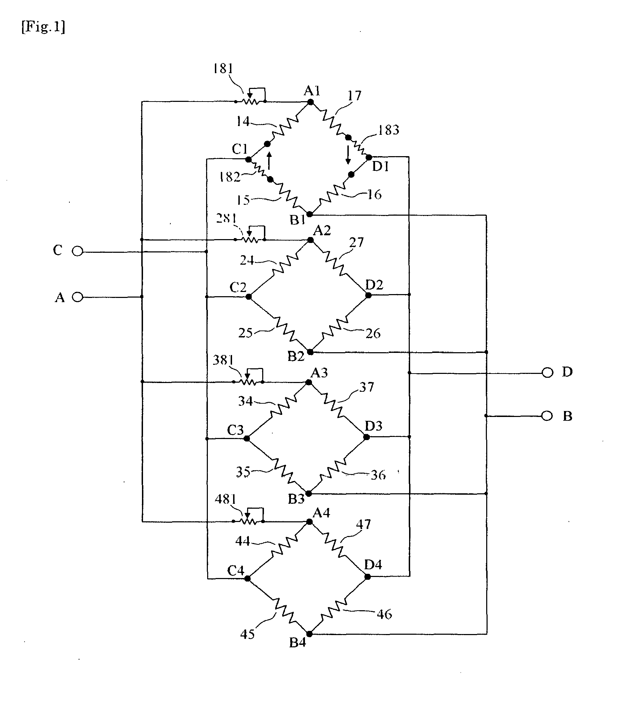

The composition of the detection circuit used in this multi-point type weighing equipment is indicated in Fig. 1.

For every load cell, four strain gauges comprise the Wheatstone bridge circuit, and it has the composition that these are connected in parallel.

The input voltage in this detection circuit is inputted between terminals AB.

The output voltage is outputted between terminal CD.

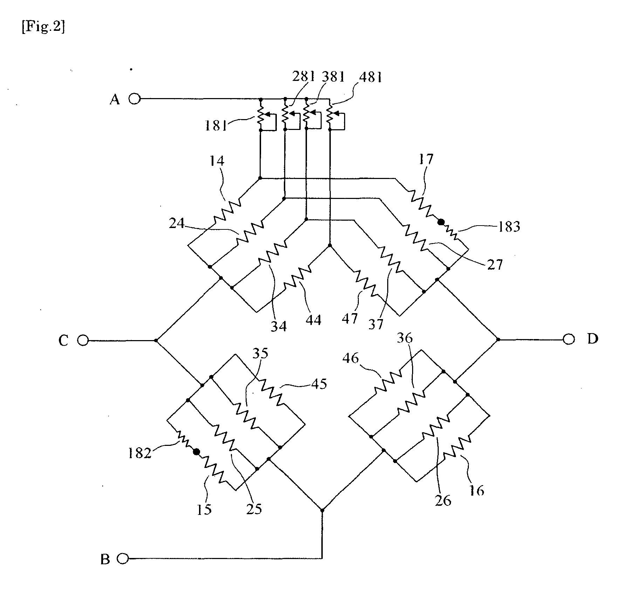

Also, composition of the detection circuit of Fig. 1, which four Wheatstone bridge circuits are overlapped and described, is indicated in Fig. 2.

In a Wheatstone bridge circuit corresponding to load cell 10, load cell input node A1 and B1 applying input voltage are provided, and load cell output node C1 and D1 outputting the output voltage are provided.

Also, as well as the Wheatstone bridge circuit corresponding to load cells 20, 30, and 40, a pair of the load cell input node (A2, B2), (A3, B3), and (A4, B4) are provided with a pair of load cell output node (C2, D2), (C3, D3), and (C4, D4), respectively.

Among each load cell input node, each side for B1, B2, B3, and B4 is connected to input terminal B.

Among each load cell output node, each side for C1, C2, C3, and C4 is connected to output terminal C in parallel; and each another side for D1, D2, D3, and D4 is connected to output terminal D.

Another side among each load cell input node is connected to input terminal A via output adjustment resistance, respectively.

Namely, input terminal A is connected via output adjustment resistance 181 between strain gauges 14 and 17 (A1), via output adjustment resistance 281 between strain gauges 24 and 27 (A2), via output adjustment resistance 381 between strain gauges 34 and 37 (A3), and via output adjustment resistance 481 between strain gauges 44 and 47 (A4), respectively.

The input voltage of this detection circuit is applied between input terminals AB, and the output voltage is read between output terminals CD.

Therefore, in this detection circuit, although four Wheatstone bridge circuits are used, the input voltage is single, and single output voltage is read.

Here, strain gauges 14 - 17, 24 - 27, 34 - 37, 44 - 47 are strain gauges of the same specification, and the resistance is changed by distortion.

The absolute value of the resistance is, for example, about 350 ohms.

However, variation exists precisely in these resistances according to a manufacture error.

These resistances are also changed by depending on temperature, and variation also exists in the degree of the change.

Therefore, when a Wheatstone bridge circuit is comprised, for example from strain gauges 14 - 17 in load cell 10, it will be in the state where zero balance in this circuit is not maintained, generally.

The state of this zero balance is also changed depended on temperature.

Also in other load cells, it is the same.

Also, not only the zero balance in each load cell but the output voltage range of each load cell, that is, the output voltage of the Wheatstone bridge circuit in case of occurring the same distortion in a flexure element, varies.

Here, in a detection circuit of Fig. 1, in case of all the load cells being not-loaded, in order to be smaller the variation of output voltage of a load cell between CD depending on temperature in case of input voltage being applied between AB, temperature compensator 182, which is the first resistance for adjustment, is provided in the Wheatstone bridge circuit corresponding to load cell 10.

Also, in case of all the load cells being not-loaded, in order to an absolute value of output voltage between CD in case of input voltage being applied between AB act as the minimum, zero balance adjustment resistance 183, which is the second resistance for adjustment, is also provided in this Wheatstone bridge circuit.

These resistances for adjustment are not inserted in the Wheatstone bridge circuit corresponding to the other load cells. Hence, only in the Wheatstone bridge circuit corresponding to one load cell, these resistances for adjustment are inserted among a plurality of load cells, which comprise this multi-point type weighing equipment.

Also, as mentioned above, output adjustment resistance 181, 281, 381, and 481 are provided corresponding to load cells 10, 20, 30, and 40, respectively.

Temperature compensator 182 is formed, for example, with copper wire; and when resistance of a strain gauge depends on the temperature, it compensates a variation of characteristics between strain gauges by changing of resistance of the copper wire depending on temperature.

This suppresses that the zero balance of a Wheatstone bridge circuit shifts depending on temperature.

Zero balance adjustment resistance 183 is the fixed resistance provided in order to maintain the zero balance of this whole Wheatstone bridge circuit connected in parallel.

Therefore, the zero balance in this Wheatstone bridge circuit connected in parallel is maintained by temperature compensator 182 and zero balance adjustment resistance 183 also in a predetermined temperature span.

The above-mentioned temperature compensator 182 and zero balance adjustment resistance 183 are, when manufacturing this multi-point type weighing equipment, each strain gauge is connected to the composition of Fig. 1, without providing temperature compensator 182 and zero balance adjustment resistance 183 (with composition being these short-circuit), after investigating a gap of the zero balance and its change in the output voltage depending on temperature between CD in case that the distortion in all the load cells is zero, it is set that this should become to the minimum as possible.

Furthermore, in Fig. 1, although temperature compensator 182 to strain gauge 15, and zero balance adjustment resistance 183 to strain gauge 17 at the side of C1 (load cell output node) are inserted in series, for this reason, temperature compensator 182 can be inserted in the strain gauge 4 side, and zero balance adjustment resistance 183 can be inserted in the strain gauge 16 at the side at C1 (load cell output node) in series.

Also, temperature compensator 182 can be inserted at the side of A1 (load cell input node) or at the side of B1 (load cell input node).

By connecting these resistances to one of the above-mentioned strain gauges in series, a gap of zero balance and its change depending on temperature can be made into the minimum.

In composition of Fig. 2, by this, it is clear that these adjustments can be performed as well as a case where a single load cell described in Fig. 5 is used.

In Fig. 2, a strain gauge, which corresponds in each load cell, is connected in parallel, and temperature compensator 182 and zero balance adjustment resistance 183 act as a form connected in parallel to the strain gauges of load cells 20, 30, and 40.

Therefore, approximately, if resistance that 4 times of the volume of temperature compensator and zero balance adjustment resistance, which is set up in case that there is no strain gauge of load cells 20, 30, and 40 in Fig. 1 and is only load cell 10, is used as temperature compensator 182 and zero balance adjustment resistance 183, zero balance and its change depending on temperature can be made small.

On the other hand, output adjustment resistance 181, 281, 381, and 481 are installed corresponding to each load cell.

These are semi-variable resistance resistors provided in order to adjust the output voltage from each load cell as uniform when there is the same distortion in each load cell, that is, when the same load is applied to each load cell.

Namely, when there is variation in the characteristics of each strain gauge, output voltage between C1 and D1 in case of applying input voltage between A1 and B1, output voltage between C2 and D2 in case of applying input voltage between A2 and B2, output voltage between C3 and D3 in case of applying input voltage between A3 and B3, and output voltage between C4 and D4 in case of applying input voltage between A4 and B4 does not become definite, even when the same distortion occurs in each load cell.

Output resistance 181, 281, 381, and 481 are adjusted so that these may become the same by being the input voltage between AB applied between A1 and B1, between A2 and B2, between A3 and B3, and between A4 and B4, as decreasing by a voltage drop of each of these output adjustment resistance ends.

Therefore, even when output voltage between C1 and D1, between C2 and D2, between C3 and D3, and between C4 and D4 are pulled out in parallel, a good output characteristic can be obtained.

By the above composition, this detection circuit can output properly the load applied to each load cell as electric signal in the predetermined temperature span.

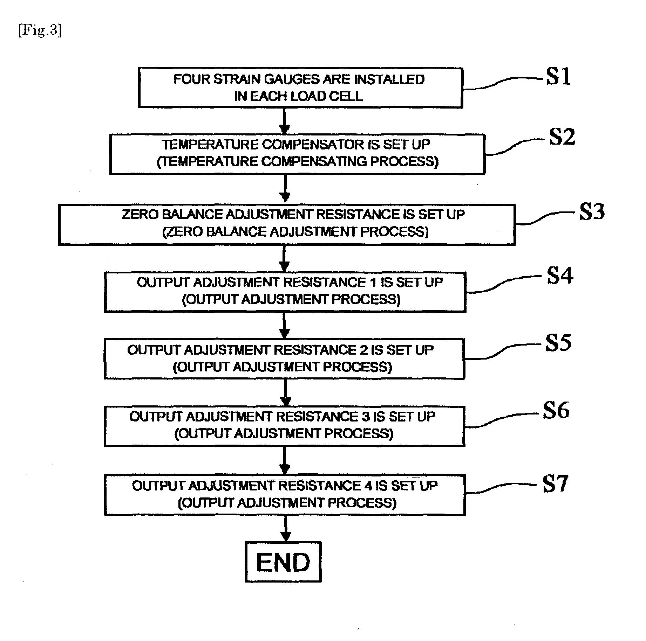

The manufacturing process in case of manufacturing the above-mentioned multi-point type weighing equipment is shown in Fig. 3.

Firstly, the platform is fixed for every load cell, the flexure element is fixed to the base, and the four strain gauges are installed in the flexure element (S1).

Then, for the detection circuit indicated in Fig. 1, output adjustment resistance 181, 281, 381, and 481, temperature compensator (first resistance for adjustment) 182, and zero balance adjustment resistance (second resistance for adjustment) 183 are not installed; however, it changes into the state where these applicable parts are made to short-circuit.

Then, temperature compensator (first resistance for adjustment) 182 is set up (S2: temperature compensating process).

In this case, for these four load cells, temperature is changed within a thermostat; input voltage is applied between AB; and the change of output voltage depending on temperature between CD is measured in case of not loading.

Here, as temperature compensator 182, for example, copper wire resistance is used; since a temperature coefficient of resistance of copper wire resistance is 3850 x $10^{-6}$ / K, this is connected to strain gauge 15 or 14 side with the length being adjusted; and the change of output voltage depending on temperature should make minimum as much as possible. Under the present circumstances, other resistance (fixed resistance) may be inserted in series or in parallel to this copper wire resistance.

Then, zero balance adjustment resistance (second resistance for adjustment) 183 is set up (S3: zero balance adjustment process).

In this case, the output voltage between CD at the time of being not loaded is measured at normal temperature, and zero balance adjustment resistance 183 is set as being absolute value of this to the minimum as possible.

Here, in the Wheatstone bridge circuit, which comprises these four uniform strain gauges, output voltage $\Delta E$ is indicated with the following equations as E is made into input voltage and Ks into a gauge factor.

$$[Equation\ 1]$$

$$\Delta E = (Ks \times \varepsilon \times E) / 4$$

$\varepsilon$ is distortion, and it becomes $\Delta R / R = Ks \times \varepsilon$, when resistance of a strain gauge is R and a resistance change is $\Delta R$.

In this equation, since fixed resistance, which has resistance $\Delta R$ produced by substituting the above-mentioned output voltage measured as $\Delta E$, is connected with strain gauge 17 or 16 side, output voltage at the time of being not loaded can be made into zero.

According to the above process, a gap of the zero balance in the output voltage between CD in this detection circuit can be made into the minimum, and a change depended on temperature can also be made small.

Then, output adjustment resistance 181 is set up (S4: output adjustment process).

In this case, while giving a certain set-up load to load cell 10, output voltage $\Delta E_1$ between C1 and D1 is measured.

A value of output adjustment resistance 181 is adjusted so that relation between E and $\Delta E_1$ should act as a predetermined relation.

Output adjustment resistance 181 is easy to adjust, for example, as using a semi-variable resistance resistor.

Also, as well as temperature compensator 182, a resistor with the temperature dependence of resistance can also be used so that the change of the output voltage depending on temperature may be compensated in this case.

In this case, a resistor, for example, made of Ni foils or the like can be used; by connecting this with other fixed resistance in parallel or in series; and it can also adjust that relation between E and $\Delta E_1$ is proper as much as possible in a predetermined temperature span.

Similarly, output adjustment resistance 281 is set up (S5: output adjustment process).

In this case, while giving a certain set-up load over load cell 20, output voltage $\Delta E_2$ between C2 and D2 is measured; and output adjustment resistance 281 sets as relation between E and $\Delta E_2$ to a predetermined relation as much as possible. Output adjustment resistance 281 can be comprised as well as output adjustment resistance 181.

Similarly, based on output voltage $\Delta E_3$ between C3 and D3, and output voltage $\Delta E_4$ between C4 and D4, output adjustment resistance 381 and 481 is set up one by one (S6, S7: output adjustment process).

In the above process, each output adjustment resistance is set up independently.

According to the above process, $\Delta E_1$, $\Delta E_2$, $\Delta E_3$, and $\Delta E_4$ become uniform; a detection circuit outputted by these acting as output voltage from CD is formed; and this multi-point type weighing equipment is manufactured.

When manufacturing the conventional multi-point type weighing equipment simply connected with four load cells, the detection circuit indicated corresponding to each load cell, shown in Fig. 5, is used.

Therefore, it was required to perform setting of temperature compensator, zero balance adjustment resistance, and output adjustment resistance, for every load cell.

In the above-mentioned manufacturing method, since it is only an output adjustment process (S4 - S7), which is performed for every load cell, the manufacturing process is simplified substantially.

Therefore, this multi-point type weighing equipment can become low-cost.

Under the present circumstances, as above-mentioned, there are few gap of zero balance, the change of the output voltage depending on temperature is small, and a good output characteristic is obtained to distortion.

Furthermore, in this multi-point type weighing equipment using a configuration, which connected four Wheatstone bridge circuits in parallel, since four Wheatstone bridge circuits are combined, a variation of output voltage and a gap of zero balance by temperature become small substantially by being equalized.

Table 1 is the result of measuring the rate of change for each output voltage depending on temperature (between C1 and D1, or the like) before the temperature compensating process (before temperature compensator is installed) in load cells 10 - 40 in case of actually manufacturing this multi-point type weighing equipment (examples 1 and 2).

Although it is preferred this absolute value is small as much as possible and within the limits of ±25 ppm / °C is desired as product specs, neither is attained in every load cell.

However, since these are equalized in an output between CD, the value decreases sufficiently as 0 ppm / °C in Example 1 and 13.75 ppm / °C in Example 2.

It is not necessary to newly install temperature compensator 182 in such a case.

Therefore, a cutback of number of component and simplification of a process by skipping a temperature compensating process can be achieved.

If variation in characteristics for every load cell is random, such an effect will become remarkable, especially.

[Table 1]

| LOAD CELL | RATE OF CHANGE FOR OUTPUT VOLTAGE (ppm/°C) | |
|---|---|---|
| | EXAMPLE 1 | EXAMPLE 2 |
| 10 | +50 | +50 |
| 20 | +100 | +75 |
| 30 | -50 | -80 |
| 40 | -100 | -100 |
| RATE OF CHANGE FOR OUTPUT VOLTAGE BETWEEN C AND D SPEC ±25ppm/°C | 0 | 13. 75 |

Similarly, it is also enabled to remove zero balance adjustment resistance 183 in a zero balance adjustment process.

Table 2 is the result of measuring a gap of the zero balance in each output voltage (between C1 and D1, or the like) before the zero balance adjustment process (before zero balance adjustment resistance is installed) in load cells 10-40 in case of actually manufacturing this multi-point type weighing equipment (examples 3 and 4).

This absolute value is preferred to be small as much as possible; although within the limits of ±0.04 mV/V is desired as product specs, there are many parts which have not been attained in every load cell.

However, since these are equalized in an output between CD, it is decreased to sufficient values, which is 0 mV/V in Example 3 and 0.0125 mV/V in Example 4.

It is not necessary to newly install zero balance adjustment resistance 183 in such a case.

Therefore, a reduction of number of component and simplification of a process by skipping a zero balance adjustment process can be achieved.

[Table 2]

| LOAD CELL | GAP OF ZERO BALANCE (mV/V) | |
|---|---|---|
| | EXAMPLE 3 | EXAMPLE 4 |
| 10 | +0.06 | +0.05 |
| 20 | +0.08 | +0.08 |
| 30 | -0.06 | -0.06 |
| 40 | -0.08 | -0.02 |
| GAP OF ZERO BALANCE BETWEEN C AND D SPEC ±0. 04mV/V | 0 | +0.0125 |

Although the above-mentioned form describes the multi-point type weighing equipment, which combines four load cells, it is not restricted as this.

If it is a weighing equipment, which combined a plurality of load cells, it is clear to apply the same composition and to perform the same effect.

In these cases, the effect of simplifying the manufacturing process becomes remarkable so that there are many load cells.

Also, in each load cell for which these are used, these of a form of a flexure element, a platform, and a base are the same specifications substantially, while four strain gauges are used respectively, it can set up suitably.

Also in a manufacturing method, an order for setting of temperature compensator, setting of zero balance adjustment resistance, and setting of output voltage regulation resistance can be suitably set up besides above-mentioned case.

The composition of these resistances for adjustment can be set up suitably if having the above-mentioned function.

When function of making a gap of zero balance into the minimum, and making small a variation of output voltage depending on temperature is realizable with either temperature compensator or zero balance adjustment resistance, only either one of these can be used.

Hence, it is good as single in the resistance for adjustment.

Also, if an output from each load cell (Wheatstone bridge circuit) is uniform even not using output adjustment resistance, it is not necessary to provide output adjustment resistance.

## Claims

1. A multi-point type weighing equipment providing a combination of a plurality of load cells (10; 20; 30; 40) by using Wheatstone bridge circuits, which one Wheatstone bridge circuit comprises four strain gauges (14 to 17; 24 to 27; 34 to 37; 44 to 47) installed on a flexure element, wherein:

   a pair of input terminals (A, B) is connected in common to a pair of load cell input nodes which is input voltage applying points for the each Wheatstone bridge circuit; and
   a pair of output terminals (C, D) is connected in common to a pair of load cell output nodes which is output voltage applying points for the each Wheatstone bridge circuit,
   **characterized in that**
   in only one of the load cell (10) in the plurality of load cells (10; 20; 30; 40), resistance (182, 183) for adjustment which includes a zero balance adjustment resistance (183) is inserted between one of the strain gauge (17) of the four strain gauges (14 to 17) and
   either the load cell output node or the load cell input node.

2. The multi-point type weighing equipment according to claim 1, wherein:

   output adjustment resistance (181; 281; 381; 481) is inserted between the input terminal (A) and the load cell input nodes of, at least, one of the plurality of load cells (10; 20; 30; 40).

3. The multi-point type weighing equipment according to claim 2, wherein the output adjustment resistance (181; 281; 381; 481) comprises semi-variable resistance.

4. A manufacturing method of a multi-point type weighing equipment according to claim 1, including a temperature compensator (182), the zero balance adjustment resistance (183) and a plurality of output adjustment resistances (181; 281; 381; 481) comprising the steps of:

   being the each load cell (10; 20; 30; 40) is into a not-loaded state; and providing a temperature compensating process, which inserts the temperature compensator (182) in order to be a variation of output voltage, depending on temperature of the each load cell (10; 20; 30; 40), between the output terminals (C, D) minimum in the case of applying input voltage between the input terminals (A, B),
   being the each load cell (10; 20; 30; 40) is into the not-loaded state; and providing the zero balance adjustment process, which inserts the zero balance adjustment resistance (183) in order to be an absolute value of output voltage between the output terminals (C, D) minimum in case of applying input voltage between the input terminals (A, B), and
   applying input voltage between the input terminals (A, B); and providing output adjustment process, which inserts the output adjustment resistances (181; 281; 381; 481) between the input terminal (A, B) and the load cell input node of the respective load cell (10; 20; 30; 40) in order to be equal as much as possible the each output voltage between the each load cell output node when the same load is applied to the each load cell (10; 20; 30; 40).

## Patentansprüche

1. Mehrpunktwiegevorrichtung, die eine Kombination einer Vielzahl von Lastzellen (10; 20; 30; 40) mit Hilfe von Wheatstone-Brückenschaltkreisen bereitstellt, wobei ein Wheatstone-Brückenschaltkreis vier Dehnungsmessstreifen (14 bis 17; 24 bis 27; 34 bis 37; 44 bis 47) umfasst, die auf einem Biegeelement angebracht sind, wobei

   ein Paar Eingangsanschlüsse (A, B) gemeinsam mit einem Paar Lastzellen-Eingangsknoten verbunden ist, die Eingangsspannungs-Anlagepunkte für jeden Wheatstone-Brückenschaltkreis sind; und

   ein Paar Ausgangsanschlüsse (C, D) gemeinsam mit einem Paar Lastzellen-Ausgangsknoten verbunden ist, die Ausgangsspannungs-Anlagepunkte für jeden Wheatstone-Brückenschaltkreis sind;
   **dadurch gekennzeichnet, dass**
   in lediglich einer der Lastzellen (10) aus der Vielzahl von Lastzellen (10; 20; 30; 40) ein Widerstand (182, 183) für die Einstellung, der einen Nullabgleichs-Einstellwiderstand (183) umfasst, zwischen einen der Dehnungsmessstreifen (17) der vier Dehnungsmessstreifen (14 bis 17) und entweder den Lastzellen-Ausgangsknoten oder den Lastzellen-Eingangsknoten eingefügt ist.

2. Mehrpunktwiegevorrichtung nach Anspruch 1, bei der:

   ein Ausgangseinstellwiderstand (181; 281; 381; 481) zwischen dem Eingangsanschluss (A) und den Lastzellen-Eingangsknoten wenigstens eines aus der Vielzahl von Lastzellen (10; 20; 30; 40) eingefügt ist.

3. Mehrpunktwiegevorrichtung nach Anspruch 2, bei dem der Ausgangseinstellwiderstand (181; 281; 381; 481) einen halbvariablen Widerstand umfasst.

4. Herstellungsverfahren für eine Mehrpunktwiegevorrichtung nach Anspruch 1, umfassend ein Temperaturausgleichselement (182), einen Nullabgleichs-Einstellwiderstand (183) und eine Vielzahl von Ausgangs-Einstellwiderständen (181; 281; 381; 481), umfassend folgende Schritte:

   Einrichten, dass sich jede Lastzelle (10; 20; 30; 40) in einem nicht geladenen Zustand befindet; und Vorsehen eines Temperaturausgleichsvorgangs, der das Temperaturausgleichselement (182), um eine Änderung der Ausgangsspannung in Abhängigkeit der Temperatur jeder Lastzelle (10; 20; 30; 40) zu sein, zwischen die Ausgangsanschlüsse (C, D), mindestens in dem Fall des Anlegens einer Eingangsspannung zwischen den Eingangsanschlüssen (A, B) einfügt,
   Einrichten, dass sich jede Lastzelle (10; 20; 30; 40) in dem nicht geladenen Zustand befindet; und Vorsehen des Nullabgleichs-Einstellvorgangs, der den Nullabgleichs-Einstellwiderstand (183), um ein absoluter Wert der Ausgangsspannung zu sein, zwischen die Ausgangsanschlüsse (C, D), mindestens in dem Fall das Anlegens einer Eingangsspannung zwischen den Eingangsanschlüssen (A, B) einfügt, und
   Anlegen einer Eingangsspannung zwischen den Eingangsanschlüssen (A, B); und Vorsehen eines Ausgangseinstellvorgangs, der die Ausgangs-Einstellwiderstände (181; 281; 381; 481) zwischen den Eingangsanschluss (A, B) und den Lastzellen-Eingangsknoten der jeweiligen Lastzelle (10; 20; 30; 40) einfügt, damit die jeweilige Ausgangsspannung zwischen dem jeweiligen Lastzellen-Ausgangsknoten so gleich wie möglich ist, wenn dieselbe Last an der jeweiligen Lastzelle (10; 20; 30; 40) anliegt.

## Revendications

1. Équipement de pesage de type multipoint procurant une combinaison faite d'une pluralité de cellules de charge (10 ; 20 ; 30 ; 40) en utilisant des circuits en pont de Wheatstone, pour lesquelles un circuit en pont de Wheatstone comprend quatre jauges de contrainte (14 à 17 ; 24 à 27 ; 34 à 37 ; 44 à 47) installées sur un élément de flexion, dans lequel :

   une paire de bornes d'entrée (A, B) est reliée en commun à une paire de noeuds d'entrée de cellules de charge qui représentent des points d'application de tension d'entrée pour chaque circuit en pont de Wheatstone,
   **caractérisé en ce que**
   dans une seule des cellules de charge (10) dans la pluralité de cellules de charge (10 ; 20 ; 30 ; 40), une résistance (182, 183) destinée à l'ajustement qui inclut une résistance d'ajustement d'équilibrage au zéro (183) est insérée entre l'une de la jauge de contrainte (17) des quatre jauges de contrainte (14 à 17) et, soit le noeud de sortie de la cellule de charge, soit le noeud d'entrée de la cellule de charge.

2. Équipement de pesage de type multipoint selon la revendication 1, dans lequel :

une résistance d'ajustement de sortie (181 ; 281 ; 381 ; 481) est insérée entre la borne d'entrée (A) et les noeuds d'entrée de cellules de charge d'au moins l'une de la pluralité des cellules de charge (10 ; 20 ; 30 ; 40).

3. Équipement de pesage de type multipoint selon la revendication 2, dans lequel la résistance d'ajustement de sortie (181 ; 281 ; 381 ; 481) comprend une résistance semi variable.

4. Procédé de fabrication d'un équipement de pesage de type multipoint conforme à la revendication 1, incluant un compensateur de température (182), la résistance d'ajustement d'équilibrage au zéro (183) et une pluralité de résistances d'ajustement de sortie (181 ; 281 ; 381 ; 481) comprenant les étapes consistant à :

faire en sorte que chaque cellule de charge (10 ; 20 ; 30 ; 40) se trouve à l'état hors charge, et fournir un traitement de compensation en température qui insère le compensateur de température (182) afin d'être considéré comme variation de la tension de sortie, en fonction de la température de chaque cellule de charge (10 ; 20 ; 30 ; 40) entre les bornes de sortie (C, D) au minimum dans le cas où l'on applique une tension d'entrée entre les bornes d'entrée (A, B),
faire en sorte que chaque cellule de charge (10 ; 20 ; 30 ; 40) se trouve à l'état hors charge, et fournir le traitement d'ajustement d'équilibrage au zéro qui insère la résistance d'ajustement d'équilibrage au zéro (183) afin d'être considéré comme une valeur absolue de la tension de sortie entre les bornes de sortie (C, D) au minimum dans le cas où l'on applique une tension d'entrée entre les bornes d'entrée (A, B), et
appliquer une tension d'entrée entre les bornes d'entrée (A, B) et fournir un traitement d'ajustement de sortie qui insère les résistances d'ajustement de sortie (181 ; 281 ; 381 ; 481) entre les bornes d'entrée (A, B) et le noeud d'entrée de cellule de charge de la cellule de charge (10 ; 20 ; 30 ; 40) respective afin d'égaliser autant que possible chaque tension de sortie entre chaque noeud de sortie de cellule de charge lorsque la même charge est appliquée à chaque cellule de charge (10 ; 20 ; 30 ; 40).

[Fig.1]

[Fig.2]

[Fig.3]

```
          ┌─────────────────────────────────────┐
          │   FOUR STRAIN GAUGES ARE INSTALLED  │────── S1
          │         IN EACH LOAD CELL           │
          └─────────────────────────────────────┘
                            │
                            ▼
          ┌─────────────────────────────────────┐
          │   TEMPERATURE COMPENSATOR IS SET UP  │────── S2
          │  (TEMPERATURE COMPENSATING PROCESS) │
          └─────────────────────────────────────┘
                            │
                            ▼
      ┌─────────────────────────────────────────────┐
      │ ZERO BALANCE ADJUSTMENT RESISTANCE IS SET UP │────── S3
      │   (ZERO BALANCE ADJUSTMENT PROCESS)          │
      └─────────────────────────────────────────────┘
                            │
                            ▼
          ┌─────────────────────────────────────┐
          │  OUTPUT ADJUSTMENT RESISTANCE 1 IS SET UP │────── S4
          │     (OUTPUT ADJUSTMENT PROCESS)     │
          └─────────────────────────────────────┘
                            │
                            ▼
          ┌─────────────────────────────────────┐
          │  OUTPUT ADJUSTMENT RESISTANCE 2 IS SET UP │────── S5
          │     (OUTPUT ADJUSTMENT PROCESS)     │
          └─────────────────────────────────────┘
                            │
                            ▼
          ┌─────────────────────────────────────┐
          │  OUTPUT ADJUSTMENT RESISTANCE 3 IS SET UP │────── S6
          │     (OUTPUT ADJUSTMENT PROCESS)     │
          └─────────────────────────────────────┘
                            │
                            ▼
          ┌─────────────────────────────────────┐
          │  OUTPUT ADJUSTMENT RESISTANCE 4 IS SET UP │────── S7
          │     (OUTPUT ADJUSTMENT PROCESS)     │
          └─────────────────────────────────────┘
                            │
                            ▼
                      ┌──────────┐
                      │   END    │
                      └──────────┘
```

[Fig.4]

(a)                              (b)

[Fig.5]

**EP 2 133 671 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005003571 A
- US 4556115 A
- US 3290928 A